**Europäisches Patentamt**

**European Patent Office**

**Office européen des brevets**

(19)

(11) Veröffentlichungsnummer : **0 348 660 B1**

(12) # EUROPÄISCHE PATENTSCHRIFT

(45) Veröffentlichungstag der Patentschrift :
**19.02.92 Patentblatt 92/08**

(51) Int. Cl.⁵ : **G01D 5/26**

(21) Anmeldenummer : **89108991.4**

(22) Anmeldetag : **19.05.89**

(54) **Positionsmesseinrichtung.**

(30) Priorität : **29.06.88 DE 3821860**
**16.07.88 DE 3824194**
**25.02.89 DE 3905897**

(43) Veröffentlichungstag der Anmeldung :
**03.01.90 Patentblatt 90/01**

(45) Bekanntmachung des Hinweises auf die
Patenterteilung :
**19.02.92 Patentblatt 92/08**

(84) Benannte Vertragsstaaten :
**DE FR GB IT**

(56) Entgegenhaltungen :
**EP-A- 0 188 189**
**EP-A- 0 266 498**
**DE-A- 3 325 387**
**GB-A- 2 159 277**
**GB-A- 2 167 863**

(73) Patentinhaber : **Dr. Johannes Heidenhain
GmbH**
**Dr.-Johannes-Heidenhain-Strasse 5 Postfach
1260**
**W-8225 Traunreut (DE)**

(72) Erfinder : **Nelle, Günther, Dr.-Ing.**
**Eichenweg 12**
**W-8221 Bergen (DE)**
Erfinder : **Schmitt, Walter, Ing.grad.**
**Hochgernstrasse 22**
**W-8225 Traunreut (DE)**
Erfinder : **Schopf, Reinhold, Dipl.-Ing. (FH)**
**Ginzing 5**
**W-8226 Altenmarkt (DE)**
Erfinder : **Weiss, Josef**
**Heinz-von-Stein-Strasse 10**
**W-8225 Traunreut (DE)**

**Beschreibung**

Die Erfindung bezieht sich auf eine Positionsmeßeinrichtung gemäß dem Oberbegriff des Anspruches 1.

Derartige Positionsmeßeinrichtungen können als Längen- oder Winkelmeßeinrichtungen ausgeführt sein, die nach den verschiedensten physikalischen Prinzipien arbeiten (DE-C- 32 15 336 und DE-C- 36 23 353).

Die Positionsmeßeinrichtungen werden an Maschinen eingesetzt, um die Relativlage zweier oder mehrerer Maschinen-Bauteile zu bestimmen.

Wenn die Positionsmeßeinrichtungen in feuchter Umgebung - beispielsweise in sogenannten Bearbeitungszentren - eingesetzt werden, ist auch bei gekapselten Positionsmeßeinrichtungen die Gefahr groß, daß durch kleinste Lecks Feuchtigkeitsdämpfe ins Innere eindringen. Bei Temperaturschwankungen können die Dämpfe kondensieren und sich unkontrolliert niederschlagen, so daß Temperaturschwankungen die Funktion der Positionsmeßeinrichtungen beeinflussen können.

Der Erfindung liegt die Aufgabe zugrunde, eine Positionsmeßeinrichtung mit hoher Störsicherheit und hoher Meßgenauigkeit zu schaffen.

Diese Aufgabe wird von einer Positionsmeßeinrichtung mit den Merkmalen des Anspruches 1 gelöst.

Vorteilhafte Ausgestaltungsmöglichkeiten sind in den abhängigen Ansprüchen angegeben.

Die Vorteile der erfindungsgemäßen Positionsmeßeinrichtung liegen vor allem darin, daß sich durch das Temperaturgefälle zwischen dem Meßteilungs-Trägerkörper und der Abtasteinrichtung einerseits und dem Gehäuse andererseits Kondensat immer am kälteren Gehäuse niederschlägt, so daß die empfindliche Meßteilung und die Abtasteinrichtung frei von Niederschlägen bleiben.

Welche der vielfältigen Möglichkeiten, die durch die abhängigen Ansprüche aufgezeigt werden, der Fachmann letztendlich realisiert, hängt vom Anwendungsfall ab.

Anhand von Ausführungsbeispielen soll die Erfindung nachstehend mit Hilfe der Zeichnungen noch näher erläutert werden.

Es zeigen

Figur 1 eine Längenmeßeinrichtung mit einem Thermoelement;

Figur 2 einen vergrößerten Abschnitt mit Heizleitungen am Meßteilungs-Trägerkörper;

Figur 3 eine Längenmeßeinrichtung mit einer Meßteilung als Heizelement;

Figur 4 eine Längenmeßeinrichtung mit einem Kondensationshohlraum;

Figur 5 einen festeingespannten Meßteilungs-Trägerkörper;

Figur 6 eine Längenmeßeinrichtung mit einem Doppelgehäuse im Querschnitt;

Figur 7 eine Variante der Meßeinrichtung gemäß Figur 4;

Figur 8 eine gekapselte Längenmeßeinrichtung mit einer Isoliereinheit im Querschnitt;

Figur 9 eine gekapselte Längenmeßeinrichtung mit einer Temperiereinheit im Querschnitt und

Figur 10 die Temperiereinheit in der Seitenansicht.

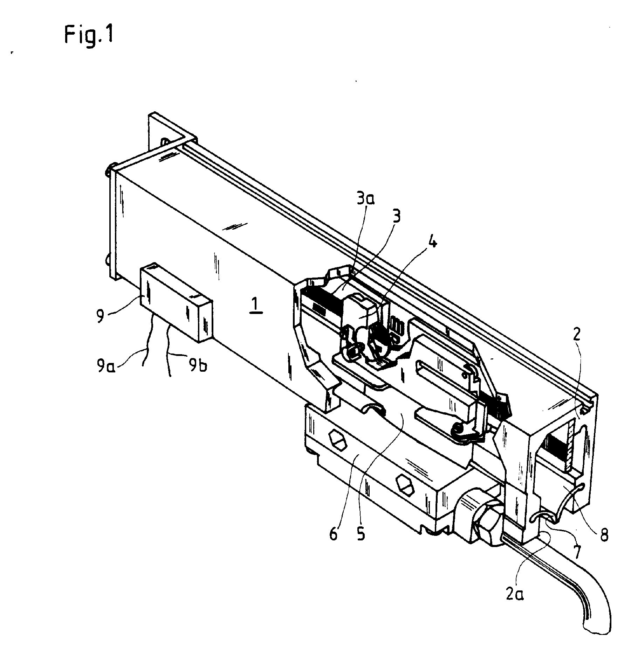

Eine in Figur 1 dargestellte Längenmeßeinrichtung 1 besteht im wesentlichen aus einem Leichtmetall-Gehäuse 2, in dem ein Meßteilungs-Trägerkörper 3 in bekannter Weise befestigt ist. Das Gehäuse 2 ist teilweise geschnitten dargestellt, so daß eine Abtasteinrichtung 4 sichtbar wird. Die Abtasteinrichtung 4 tastet in ebenfalls bekannter Weise photo-elektrisch eine Meßteilung 3a ab, die auf dem Meßteilungs-Trägerkörper 3 aufgebracht ist. Ein Mitnehmer 5, der den Querschnitt eines zweiseitigen Schwertes hat, verbindet die Abtasteinrichtung 4 mit einem Montagefuß 6. Der Mitnehmer 5 durchragt einen Längsschlitz 2a im Gehäuse 2, der durch dachförmig angeordnete Dichtlippen 7 und 8 abgedichtet ist.

Eine nicht dargestellte Maschine, bei der die Verschiebungen zwischen Maschinenbett und Schlitten gemessen werden sollen, trägt am Maschinenbett über Montagefuß 6 und Mitnehmer 5 die Abtasteinrichtung 4 und am Schlitten das Gehäuse 2 mit dem Meßteilungs-Trägerkörper 3.

Wie eingangs beschrieben, dringt durch feinste Lecks Feuchtigkeit in den Innenraum des im wesentlichen allseitig geschlossenen Gehäuses 2 ein. Durch Temperaturschwankungen in der Umgebung der Positionsmeßeinrichtung 1 kann dieser Feuchtigkeitsdampf kondensieren und sich am MeßteilungsTrägerkörper 3 oder an der Abtasteinrichtung 4 unkontrolliert niederschlagen. Das Kondensat stellt eine Verschmutzung der für die Funktion der Positionsmeßeinrichtung 1 wesentlichen Bauteile dar und führt deshalb zu Störungen.

Mit Hilfe eines Thermoelementes 9, das bevorzugt als Peltierelement ausgebildet ist, wird am Gehäuse 2 ein Kältepol geschaffen, in dessen Nähe sich das Kondensat bildet. Dadurch wird die Feuchtigkeit am Gehäuse 2 gezielt gebunden, so daß sich an dem Meßteilungs-Trägerkörper 3 und der Abtasteinrichtung 4 kein störender Tau bilden kann.

Das Peltierelement 9 wird über Anschlußdrähte 9a und 9b extern mit der nötigen Energie versorgt.

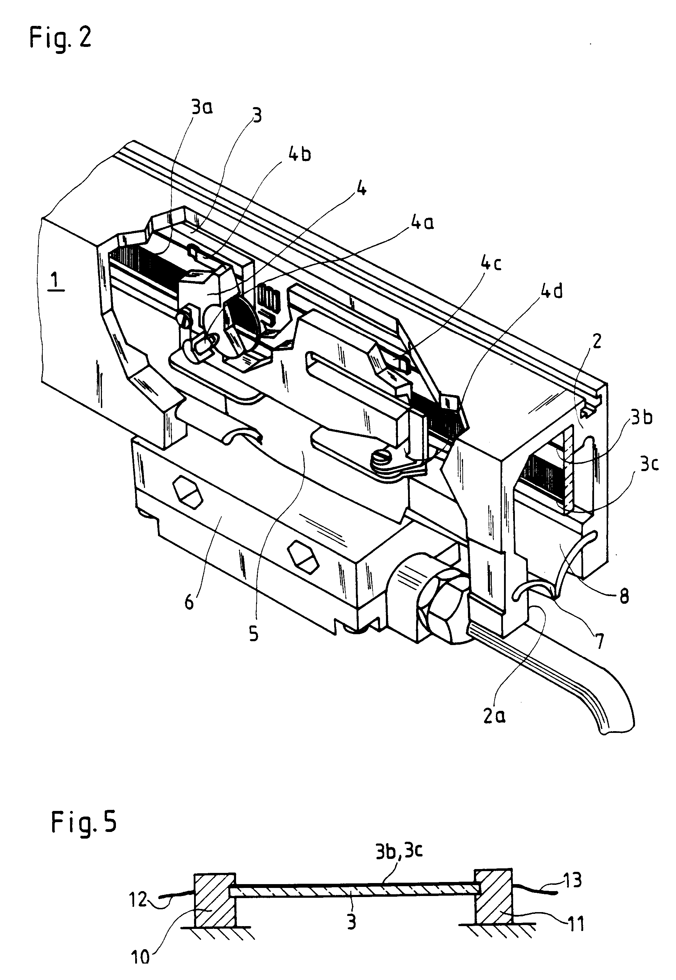

In Figur 2 ist ein vergrößerter Abschnitt der Positionsmeßeinrichtung 1 dargestellt, bei der auf andere Weise ein Temperaturgefälle zwischen den Bauteilen der Positionsmeßeinrichtung 1 erzeugt wird.

Bei diesem und den folgenden Ausführungsbeispielen sind gleiche Bauteile oder Bauteile mit gleicher

2

Funktion mit jeweils denselben Bezugzeichen versehen, um die Anzahl der Bezugzeichen gering zu halten und die Gegenüberstellung der einzelnen Ausführungsbeispiele zu erleichtern.

Im Gegensatz zum Ausführungsbeispiel gemäß Figur 1 wird hier nicht das Gehäuse 2 gekühlt, sondern die vor Betauung zu schützenden Bauelemente wie Meßteilungs-Trägerköper 3 und Abtasteinrichtung 4 werden gering erhitzt.

Dies geschieht über Heizleitungen 3b, 3c, die zusätzlich zur Meßteilung 3a auf dem Trägerkörper 3 aufgedampft sind. Dabei wird davon ausgegangen, daß der Meßteilungs-Trägerkörper 3 aus Glas oder Keramik besteht. Wenn der Meßteilungs-Trägerkörper 3 aus elektrisch leitendem Material wie Metall besteht, muß zwischen ihm und den Heizleitungen 3b, 3c eine elektrisch isolierende Zwischenschicht angebracht werden, die jedoch den Wärmeübergang von den Heizleitungen 3b, 3c auf den Meßteilungs-Trägerkörper 3 möglichst nicht behindert.

Die Heizleitungen 3b, 3c werden von einem Strom durchflossen und können auch im Meßteilungs-Trägerkörper 3 eingeschmolzen sein. Auf eine bildliche Darstellung dieser Variante wurde verzichtet. Die Speisung der Heizleitungen 3b, 3c kann auf die unterschiedlichsten Weisen erfolgen. In Figur 2 sind an der Abtasteinrichtung 4 Schleifkontakte 4b, 4c, 4d gezeigt, über die ein vorzugsweise geregelter Heizstrom den Heizleitungen 3b, 3c zugeführt wird. Anstelle der Schleifkontakte 4b, 4c, 4d können auch Kugellager zur Stromübertragung benutzt werden, die gleichzeitig die Abtasteinrichtung 4 an dem Meßteilungs-Trägerkörper 3 führen. Auch eine induktive Übertragung des Heizstromes ist möglich.

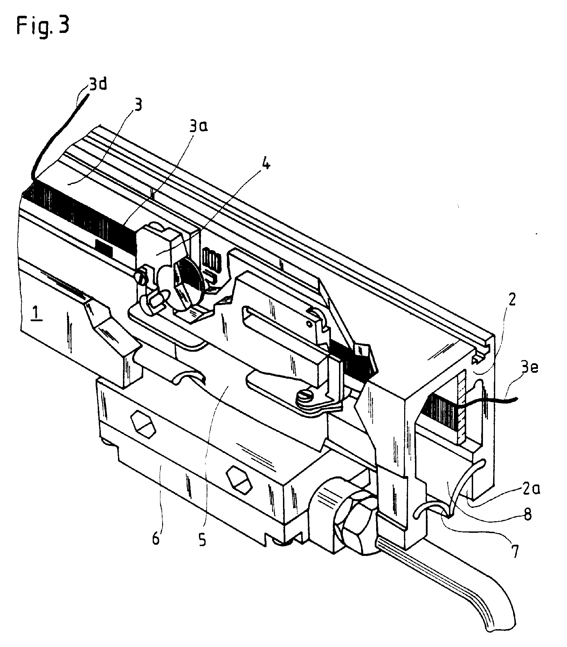

Figur 3 zeigt eine Lösung zum Erzeugen eines Temperaturgefälles, bei der die Meßteilung 3a selbst von Strom durchflossen wird. Die Meßteilung 3a besteht beispielsweise aus Chrom und ist auf ihren Trägerkörper 3 aufgedampft. Die Speisung erfolgt über besondere Zuleitungen 3d, 3e, die am Meßteilungs-Trägerkörper 3 in ähnlicher Weise befestigt werden können, wie bei heizbaren Heckscheiben aus dem Automobilbau bekannt ist.

Wenn der Heizstrom geregelt werden soll, ist es sinnvoll, auf dem Meßteilungs-Trägerkörper 3 temperaturabhängige Fühlerwiderstände aufzudampfen. Dieser Vorgang kann, ebenso wie das Aufbringen der Heizleitungen, bereits bei der Herstellung der Meßteilung erfolgen. Auf eine zeichnerische Darstellung wurde verzichtet.

Beim Heizen des Meßteilungs-Trägerkörpers 3 verändern sich naturgemäß seine Abmessungen. Dieser Effekt kann in vielfältiger Weise berücksichtigt werden. Eine Möglichkeit besteht darin, den Meßteilungs-Trägerkörper 3 auf Untermaß zu fertigen, so daß er im beheizten Zustand sein Sollmaß erreicht. Ferner ist es möglich, durch eine entsprechende Heizungsregelung die Ausdehnung des Meßteilungs-Trägerkörpers 3 der temperaturbedingten Ausdehnung der Maschine anzupassen, an der die Positionsmeßeinrichtung 1 angebaut ist. Diese Methode läßt sich so ausgestalten, daß durch partiell unterschiedliche Erwärmung des Meßteilungs-Trägerkörpers 3 eine nichtlineare Fehlerkorrektur vorgenommen werden kann.

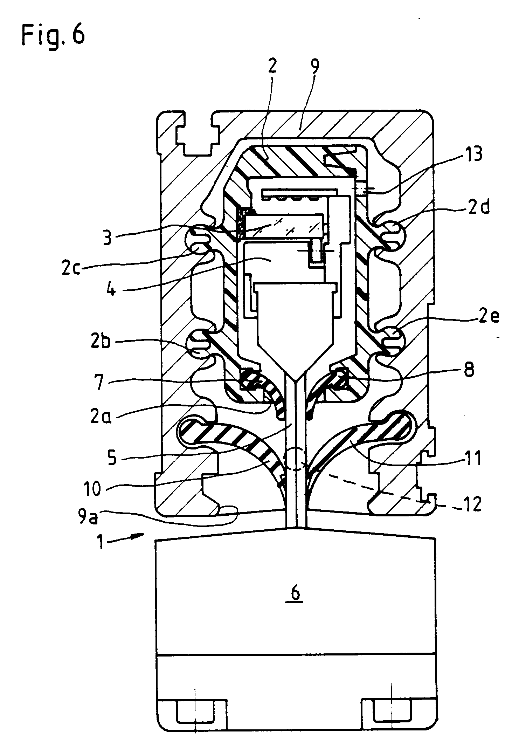

Eine weitere Möglichkeit, den durch das Heizen bedingten Temperaturgang meßtechnisch zu beherrschen, besteht darin, den Meßteilungs-Trägerkörper 3 mit Hilfe von Befestigungselementen 10 und 11 derart an der Maschine fest einzuspannen, daß die maschinen-abhängigen Abmessungsänderungen dem Meßteilungs-Trägerkörper 3 derart aufgezwungen werden, daß die heizungsbedingten Änderungen nicht zur Wirkung kommen. Diese Art der Befestigung des Meßteilungs-Trägerkörpers 3 ist sehr stark schematisiert in Figur 5 gezeigt. In sehr vorteilhafter Weise kann bei dieser Befestigungsart die Speisung der Heizleitungen 3b, 3c durch die Befestigungselemente 10 und 11 erfolgen, die über Zuleitungen 12 und 13 mit einer nicht dargestellten Energiequelle verbunden sind.

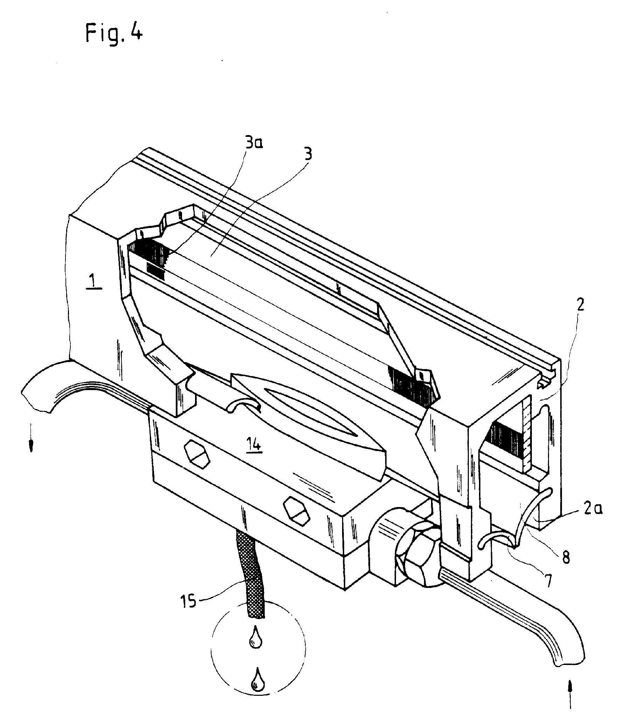

In Figur 4 ist nochmals die Alternative aufgegriffen, das Gehäuse 2 bzw. einen mit dem Gehäuse 2 verbundenen Kondensations-Hohlraum 14 kühler zu halten als den Meßteilungs-Trägerkörper 3 bzw. die hier nicht dargestellte Abtasteinrichtung. Der Kondensations-Hohlraum 14 ist mit dem Inneren des Gehäuses 2 verbunden. Da in beiden Hohlräumen demgemäß derselbe Dampfdruck vorhanden ist, kondensiert im Kondensations-Hohlraum 14 die Feuchtigkeit, die die Sättigung im kühleren Kondensations-Hohlraum 14 übersteigt. Dadurch herrscht im Inneren des Gehäuses 2 eine geringere relative Feuchte.

Im Kondensations-Hohlraum 14 sollte ein Feuchtetauscher vorgesehen sein, der mit Hilfe seiner Austauschfläche die kondensierte Feuchte an trockenere Außenluft abgeben kann. Ein solcher Feuchtetauscher kann ein Docht 15 sein, der feuchtedurchlässig aber weitgehend luftundurchlässig ist. Um die Abgabe der kondensierten Feuchte an die Außenluft mittels Docht zu versinnbildlichen, ist in der Figur 4 die Tropfenform im strichpunktierten Kreis gewählt worden. Diese Darstellung bedeutet aber nicht, daß die Feuchtigkeit abtropfen wird, vielmehr wird sie verdunsten.

Die Kühlung des Kondensations-Hohlraumes 14 kann durch unterschiedliche Maßnahmen erfolgen. Im gezeigten Beispiel fließt durch Pfeile angedeutete Kühlflüssigkeit aus dem Kühlmittelkreislauf der Maschine durch den Kondensations-Hohlraum 14.

Analog zu Figur 1 ist aber auch eine Kühlung durch Peltierelemente möglich.

Zur Kühlung sind im Grunde alle Kühlmittel verwendbar ($CO_2$-Schnee u. dgl.).

Wenn ein Kondensations-Hohlraum 14, wie er in Figur 4 mit einer Positionsmeßeinrichtung 1 dargestellt ist, mit mehreren Positionsmeßeinrichtungen verbunden ist, kann der bauliche Aufwand erheblich verringert werden.

Außer durch Feuchtetauscher kann das Kondensat durch austauschbare Elemente chemisch oder physikalisch gebunden werden (Silicagel-Kapseln).

Eine in Figur 6 dargestellte Längenmeßeinrichtung 1 besteht aus einem Innengehäuse 2, in dem ein Meßteilungs-Trägerkörper 3 in bekannter Weise befestigt ist. Das Innengehäuse 2 ist geschnitten dargestellt, so daß eine Abtasteinrichtung 4 sichtbar wird. Die Abtasteinrichtung 4 tastet in ebenfalls bekannter Weise photoelektrisch eine Meßteilung (nicht dargestellt) ab, die auf dem Meßteilungs-Trägerkörper 3 aufgebracht ist. Ein Mitnehmer 5, der den Querschnitt eines zweiseitigen Schwertes hat, verbindet die Abtasteinrichtung 4 mit einem Montagefuß 6. Der Mitnehmer 5 durchragt einen Längsschlitz 2a im Innengehäuse 2, der durch V-förmig angeordnete Dichtlippen 7 und 8 abgedichtet ist.

Ein Außengehäuse 9 umschließt das Innengehäuse 2, welches über Halteelemente 2b, 2c, 2d, 2e im Innenraum des Außengehäuses 9 befestigt ist. Weitere Dichtlippen 10 und 11 schließen einen Längsschlitz 9a des Außengehäuses 9 ab. Diese Dichtlippen 10 und 11 sind ebenfalls V-förmig angeordnet und werden ebenfalls vom Mitnehmer 5 durchragt.

Oftmals wird die Anordnung der Dichtlippen 7, 8 und 10,11 als dachförmig beschrieben - diese Bezeichnungs- und Betrachtungsweise ist natürlich von der Anbaulage der Positionsmeßeinrichtung 1 abhängig.

Gemäß der Erfindung sind die beiden Gehäuse 2 und 9 aus verschiedenen Materialien, deren Wärmeleitkoeffizienten sich möglichst stark voneinander unterscheiden. So soll das Gehäuse 2 einen möglichst kleinen und das Gehäuse 9 einen möglichst großen Wärmeleitkoeffizienten haben. Aus diesem Grund besteht das Innengehäuse 2 aus faserverstärktem Kunststoff und das Außengehäuse 9 aus Aluminium.

Eine nicht dargestellte Maschine, bei der die Verschiebungen zwischen Maschinenbett und Schlitten gemessen werden sollen, trägt am Maschinenbett über Montagefuß 6 und Mitnehmer 5 die Abtasteinrichtung 4 und am Schlitten die Gehäuse 2 und 9 mit dem Meßteilungs-Trägerkörper 3.

Wie eingangs beschrieben, dringt durch feinste Lecks Feuchtigkeit in den Innenraum der im wesentlichen allseitig geschlossenen Positionsmeßeinrichtung 1 ein. Durch Temperaturschwankungen in der Umgebung der Positiosmeßeinrichtung 1 kann dieser Feuchtigkeitsdampf kondensieren und sich am Meßteilungs-Trägerkörper 3 oder an der Abtasteinrichtung 4 unkontrolliert niederschlagen. Das Kondensat stellt eine Verschmutzung der für die Funktion der Positionsmeßeinrichtung 1 wesentlichen Bauteile dar und führt deshalb zu Störungen.

Mit dem Doppelgehäuse gemäß der Erfindung wird die Gefahr des Beschlagens von Meßteilungs-Trägerkörper 3 und Abtasteinrichtung 4 sehr stark herabgesetzt.

Sinkt beispielsweise die Außentemperatur in der Umgebung der Positionsmeßeinrichtung 1 bei nahezu gesättigter Luft im Geräteinneren ab, dann werden die Innenflächen des Außengehäuses 9 wegen der hohen Wärmeleitfähigkeit sehr schnell die niedrige Außentemperatur annehmen. Anschließend kühlt die Luft zwischen dem Außengehäuse 9 und dem Innengehäuse 2 ab, die Feuchte der dann übersättigten Luft schlägt sich an den Innenflächen des Außengehäuses 9 nieder und läuft dann nach außen ab. Um das Ablaufen zu gewährleisten, sind im Außengehäuse 9 an geeigneten Stellen Öffnungen 12 vorhanden. Es entsteht ein Dampfdruckgefälle zwischen dem Innenraum des Innengehäuses 2 und dem Raum zwischen den Gehäusen 2 und 9, das aber über kleine Öffnungen 13 im Innengehäuse 2 wieder ausgeglichen wird. Wegen der kleineren Wärmeleitfähigkeit des Innengehäuses 2 nimmt der Dampfgehalt im Innengehäuse 2 schneller ab als die Temperatur, so daß keine übersättigte Luft im Inneren des Innengehäuses 2 entstehen kann, die zum Beschlagen von Meßteilungs-Trägerkörper 3 und/oder Abtasteinrichtung 4 führen könnte.

Durch die zweifachen Dichtlippen 7,8 und 10,11 ist ein guter mechanischer Schutz gegenüber Umgebungseinflüssen gewährleistet, der auch gegen Spritzwasser wirkt.

Die Halteelemente 2b,2c,2d,2f sind so ausgebildet, daß sich das Innengehäuse 2 in das Außengehäuse 9 einschieben läßt, dort aber seine Lage nicht ohne weiteres verändern kann. Die Halteelemente und deren Aufnahmekanäle sind längs der Gehäuse unterbrochen, um die Ableitung des Kondensates nicht zu behindern.

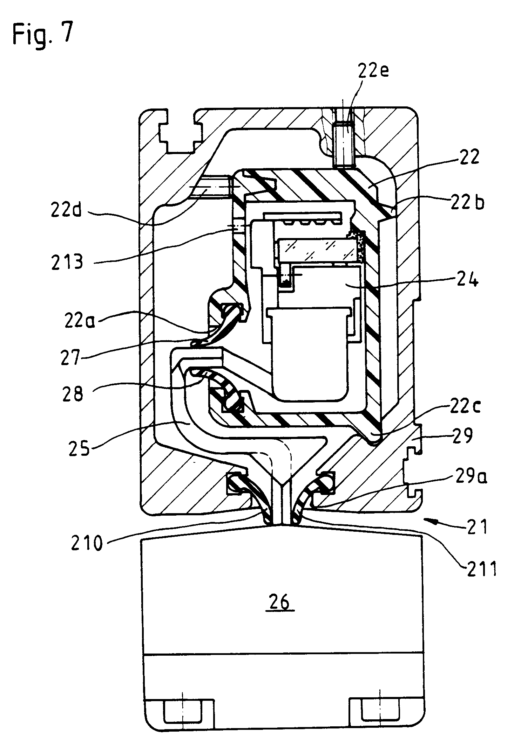

In Figur 7 ist eine Variante der Positionsmeßeinrichtung 1 gemäß der Figur 6 dargestellt. Bezugszeichen sind nur eingesetzt, soweit sich Abweichungen von Figur 6 ergeben. Bei dieser Positionsmeßeinrichtung 21 weist ein Innengehäuse 22 einen Längsschlitz 22a auf, dessen Lage gegenüber einem Längsschlitz 29a in einem Außengehäuse 29 um ca.90° verdreht ist. Die Längsschlitze 22a und 29a sind mit Dichtlippen 27,28 und 210,211 abgedichtet. Ein Mitnehmer 25, der eine Abtasteinrichtung 24 mit einem Montageelement 26 verbindet, ist mehrfach gekröpft, um die Längsschlitze 22a und 29a durchgreifen zu können. Das Innengehäuse 22 stützt sich über Ansätze 22b und 22c an Innenflächen des Außengehäuses 29 ab und kann in gewissen Grenzen durch Einstellschrauben 22d und 22e justiert werden. Zum Dampfdruckausgleich sind Öffnungen 213 vorgesehen.

Anstelle der Öffnungen 13 und 213 zum Dampfdruckausgleich können auch andere Gehäuseöffnungen vorgesehen werden. In nicht gezeigter Weise können jeweils ein oder beide Endstücke an den Innengehäusen 2 oder 22 entfallen.

Am Außengehäuse 29 sind keine Öffnungen zum Ableiten des Kondensates gezeigt, da für dieses Beispiel angenommen wird, daß das Kondensat über die Dichtlippen 210,211 abtropft. Dennoch können auch bei diesem Ausführungsbeispiel gesonderte Öffnungen vorgesehen werden.

Durch die nicht fluchtende Anordnung der beiden Längsschlitze 22a und 29a ist der Schutz gegenüber Umgebungseinflüssen besonders hoch, so daß Eindringen von Feuchtigkeit noch weiter erschwert ist.

Unter fluchtender Anordnung soll hier verstanden werden, daß die Längsschlitze in Richtung vom Montageelement zur Abtasteinrichtung auf einer Geraden hintereinander liegen, was durch die Darstellung in Figur 6 verdeutlicht wird.

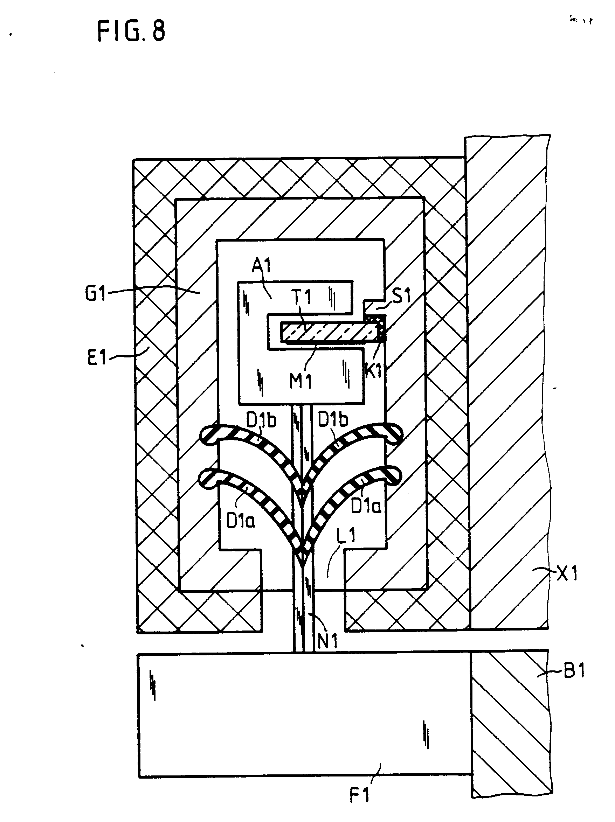

In Figur 8 ist eine gekapselte Längenmeßeinrichtung im Querschnitt dargestellt, bei der ein Trägerkörper T1 mit einer Meßteilung M1 im Inneren eines allseits geschlossenen Gehäuses G1 in Form eines Hohlprofils auf einem Steg S1 mittels einer Klebeschicht K1 befestigt ist. Die Meßteilung M1 wird von einer Abtasteinheit A1 in bekannter Weise beispielsweise photoelektrisch abgetastet. Das Gehäuse G1 weist einen Längsschlitz L1 auf, der durch zwei dachförmig geneigte flexible Dichtlippenpaare D1a, D1b verschlossen ist, durch die ein Mitnehmer N1 in Form eines doppelseitigen Schwertes hindurchragt, der die Abtasteinheit A1 mit einem Montagefuß F1 verbindet.

Das Gehäuse G1 ist allseitig bis auf den Bereich des Längsschlitzes L1 von einer thermischen Isoliereinheit E1 in Form einer äußeren Isolierschicht ummantelt und an einem Schlitten X1 einer nicht gezeigten Bearbeitungsmaschine beispielsweise an seinen beiden Enden mittels Befestigungswinkel - wie in der DE-C- 25 05 585 beschrieben - befestigt. Der Montagefuß F1 ist in beliebiger Weise mit dem Bett B1 der Bearbeitungsmaschine verbunden; der Schlitten X1 und das Bett B1 stellen die beiden Objekte dar, deren Relativlage gemessen werden soll.

Wie eingangs beschrieben, lassen sich kleine Leckstellen zwischen den beiden Dichtlippenpaaren D1a, D1b, insbesondere in den Bereichen der beiden Schneidkanten des Mitnehmers N1, nicht ganz vermeiden, durch die in feuchter Umgebung Feuchtigkeitsdämpfe in das Innere des Gehäuses G1 eindringen können. Bei Temperaturschwankungen können diese Feuchtigkeitsdämpfe kondensieren und sich in unkontrollierter Weise auf der Meßteilung M1 und/oder in der Abtasteinheit A1 niederschlagen; dieses Kondensat stellt somit eine Verschmutzung der für die Meßfunktion wesentlichen Teile der Positionsmeßeinrichtung dar und kann die Meßsicherheit und die Meßgenauigkeit in einem Maße beeinträchtigen, die bei hochpräzisen Positionsmeßeinrichtungen nicht mehr tragbar ist.

Durch das Vorsehen der thermischen Isoliereinheit E1 können Temperaturabsenkungen in der unmittelbaren Umgebung der Positionsmeßeinrichtung nicht in das Innere des Gehäuses G1 durchgreifen, so daß zwischen der Meßteilung M1 und der Abtasteinheit A1 im Inneren des Gehäuses G1 und der unmittelbaren Umgebung außerhalb des Gehäuses G1 ein Temperaturgefälle besteht. Da die Temperatur im Inneren des Gehäuses G1 bei Temperaturschwankungen in der Umgebung weitgehend erhalten bleibt, kommt es im Inneren des Gehäuses G1 nicht zur störenden Kondensatbildung der Feuchtigkeitsdämpfe.

Zur Erhöhung dieses thermischen Isolationseffektes besteht der Mitnehmer N1 aus einem Material mit sehr geringer Wärmeleitfähigkeit, beispielsweise aus einem faserverstärkten Kunststoff; des weiteren ist zusätzlich zu dem äußeren Dichtlippenpaar D1a noch ein inneres Dichtlippenpaar D1b vorgesehen, das darüberhinaus das Eindringen von Feuchtigkeitsdämpfen in das Innere des Gehäuses G1 reduziert.

In nicht dargestellter Weise kann die thermische Isoliereinheit E1 auch als eine innere Isolierschicht an den Innenflächen des Gehäuses G1 ausgebildet sein, um thermische Wechselwirkungen zwischen dem Inneren des Gehäuses G1 und der Umgebung auszuschließen. Ferner kann auch das Gehäuse G1 selbst aus wärmeisolierendem faserverstärkten Kunststoff die thermische Isoliereinheit E1 bilden.

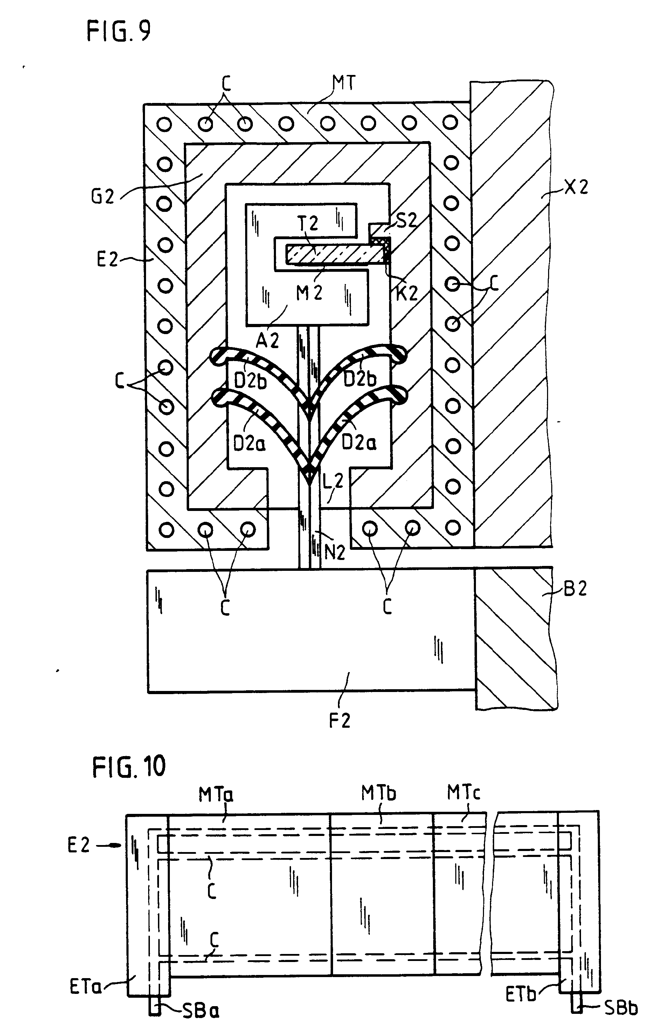

In Figur 9 ist eine gekapselte Längenmeßeinrichtung im Querschnitt dargestellt, die die gleichen Bauteile wie die Längenmeßeinrichtung nach Figur 8 und somit auch die gleichen Bezugszeichen aufweist, wobei jedoch die Ziffer 1 durch die Ziffer 2 ersetzt ist.

Das Gehäuse G2 ist in thermischem Kontakt in eine wannenartige Temperiereinheit E2 eingesetzt, die ihrerseits in beliebiger Weise am Schlitten X2 der Bearbeitungsmaschine befestigt ist. Diese Temperiereinheit E2 besteht aus einem U-förmigen Mittelteil MT, dessen Boden und Wände mit in Längserstreckung verlaufenden Bohrungen C versehen sind und das an beiden Enden von plattenförmigen Endteilen ETa, ETb begrenzt ist, die jeweils eine Sammelbohrung SBa, SBb für die Bohrungen C des Mittelteils MT aufweisen. Am einen Endteil ETa wird die Sammelbohrung SBa mit einer temperaturgeregelten Flüssigkeit beschickt, die nach dem Durchströmen der Bohrungen C des Mittelteils MT aus der Sammelbohrung SBb des anderen Endteils ETb wieder austritt (Figur 10).

Durch das Vorsehen dieser Temperiereinheit E2 können Temperaturabsenkungen in der unmittelbaren Nähe der Positionsmeßeinrichtung ebenfalls nicht in das Innere des Gehäuses G2 durchgreifen, so daß zwischen der Meßteilung M2 und der Abtasteinheit A2 im Inneren des Gehäuses G2 und der unmittelbaren Umgebung außerhalb des Gehäuses G2 ein Temperaturgefälle besteht. Da die Temperatur im Inneren des Gehäuses G2 bei Temperaturschwankungen in der Umgebung konstant bleibt, kommt es im Inneren des Gehäuses G2 nicht zur störenden Kondensatbildung der Feuchtigkeitsdämpfe.

Nach Figur 10 kann das Mittelstück MT auch aus mehreren Einzelstücken MTa, MTb, MTc ..., insbesondere mit unterschiedlichen Rasterlängen, bestehen, die in einfacher Weise an verschieden lange Positionsmeßeinrichtungen angepaßt werden können.

In nicht gezeigter Weise kann die Temperiereinheit gleichzeitig das Gehäuse für die Meßteilung und die Abtasteinheit bilden.

Die Bohrungen C des Mittelteils MT bzw. der Einzelstücke MTa, MTb, MTc können auch abwechselnd gegenläufig durchströmt werden, wobei die Endteile ETa, ETb jeweils zwei Sammelbohrungen SBa, SBb für den Zulauf und den Ablauf der Flüssigkeit aufweisen.

Die thermische Isoliereinheit E1 kann gleichfalls aus Einzelstücken bestehen, die insbesondere verschiedene Rasterlängen aufweisen; ferner kann die Isoliereinheit E1 auch aus einer inneren Isolierschicht und aus einer äußeren Isolierschicht bestehen.

Die Erfindung kann sowohl bei sogenannten offenen als auch bei gekapselten Positionsmeßeinrichtungen angewandt werden, die nach den verschiedensten physikalischen Meßprinzipien arbeiten.

## Patentansprüche

1. Positionsmeßeinrichtung - insbesondere gekapselter Bauart - mit einem Meßteilungs-Trägerkörper (3;T1;T2) und einer Abtasteinrichtung (4;A1;A2) zum Abtasten der Meßteilung, dadurch gekennzeichnet, daß Mittel (3a, 3b, 3c; 9; 14; E1; E2) zum Erzeugen eines Temperaturgefälles zwischen dem Meßteilungs-Trägerkörper (3; T1; T2) und/oder der Abtasteinrichtung (4; A1; A2) einerseits und der unmittelbaren Umgebung der vorgenannten Bauteile andererseits vorgesehen sind.

2. Positionsmeßeinrichtung nach Anspruch 1, dadurch gekennzeichnet, daß das Temperaturgefälle durch eine Heizung (3a, 3b, 3c) für den Meßteilungs-Trägerkörper (3) und/oder die Abtasteinrichtung (4) erzeugt wird.

3. Positionsmeßeinrichtung nach Anspruch 2, dadurch gekennzeichnet, daß auf dem oder in dem Meßteilungs-Trägerkörper (3) Heizleitungen (3b, 3c) angeordnet sind.

4. Positionsmeßeinrichtung nach Anspruch 2, dadurch gekennzeichnet, daß die Meßteilung (3a) als Heizleitung ausgebildet ist.

5. Positionsmeßeinrichtung nach Anspruch 2, dadurch gekennzeichnet, daß durch die Heizung (3a, 3b, 3c) des Meßteilungs-Trägerkörpers (3) dessen Abmessungen gezielt verändert werden können.

6. Positionsmeßeinrichtung nach Anspruch 3, dadurch gekennzeichnet, daß den Heizleitungen (3b, 3c) Heizstrom über Schleifkontakte (4b, 4c, 4d) der Abtasteinrichtung (4) zugeführt wird.

7. Positionsmeßeinrichtung nach Anspruch 2, 3 und 4, dadurch gekennzeichnet, daß der geheizte Meßteilungs-Trägerkörper (3) mit Hilfe von Befestigungselementen (10, 11) an den Enden fest eingespannt ist.

8. Positionsmeßeinrichtung nach Anspruch 7, dadurch gekennzeichnet, daß der Heizstrom mittels Zuleitungen (12, 13) über die Befestigungselemente (10, 11) zugeführt wird.

9. Gekapselte Positionsmeßeinrichtung nach Anspruch 1, dadurch gekennzeichnet, daß das Temperaturgefälle durch Abkühlen eines Gehäuses (2) erzeugt wird.

10. Gekapselte Positionsmeßeinrichtung nach Anspruch 9, dadurch gekennzeichnet, daß mittels wenigstens eines Thermoelements (9) - vorzugsweise eines Peltierelements - am Gehäuse (2) wenigstens ein Kältepol geschaffen wird.

11. Gekapselte Positionsmeßeinrichtung nach Anspruch 9, dadurch gekennzeichnet, daß das Gehäuse (2) mindestens einen gekühlten Kondensations-Hohlraum (14) aufweist.

12. Gekapselte Positionsmeßeinrichtung nach Anspruch 11, dadurch gekennzeichnet, daß der Kondensations-Hohlraum (14) durch den Kühlmittelkreislauf einer Maschine gekühlt wird, an der die Positionsmeßeinrichtung (1) angebaut ist.

13. Gekapselte Positionsmeßeinrichtung nach Anspruch 11, dadurch gekennzeichnet, daß der Kondensations-Hohlraum (14) durch wenigstens ein Peltierelement gekühlt wird.

14. Gekapselte Positionsmeßeinrichtung nach Anspruch 11, dadurch gekennzeichnet, daß der Kondensations-Hohlraum (14) durch $CO_2$-Schnee gekühlt wird.

15. Gekapselte Positionsmeßeinrichtung nach Anspruch 1, 12 oder 15, dadurch gekennzeichnet, daß am Gehäuse (2) und/oder dem Kondensations-Hohlraum (14) ein Feuchtetauscher (15) vorgesehen ist.

16. Gekapselte Positionsmeßeinrichtung nach Anspruch 15, dadurch gekennzeichnet, daß der Feuchtetauscher als Docht (15) ausgebildet ist.

17. Gekapselte Positionsmeßeinrichtung nach Anspruch 1, dadurch gekennzeichnet, daß das durch das Temperaturgefälle entstehende Kondensat chemisch und/oder physikalisch gebunden wird.

18. Gekapselte Positionsmeßeinrichtung nach Anspruch 17, dadurch gekennzeichnet, daß die Bindung des Kondensates durch austauschbare Silicagel-Kapseln erfolgt.

19. Gekapselte Positionsmeßeinrichtung nach Anspruch 11, dadurch gekennzeichnet, daß für mehrere Positionsmeßrichtungen (1) ein einziger Kondensations-Hohlraum (14) vorgesehen ist.

20. Gekapselte Positionsmeßeinrichtung nach Anspruch 1, dadurch gekennzeichnet, daß die Kapselung aus einem Innengehäuse (2,22) mit geringer Wärmeleitfähigkeit und einem Außengehäuse (9,29) mit hoher Wärmeleitfähigkeit besteht.

21. Gekapselte Positionsmeßeinrichtung nach Anspruch 20, dadurch gekennzeichnet, daß das Innengehäuse (2,22) aus Kunststoff und das Außengehäuse (9, 29) aus Aluminium besteht.

22. Gekapselte Positionsmeßeinrichtung nach Anspruch 20, dadurch gekennzeichnet, daß das Innengehäuse (2,22) Öffnungen (13,213) zum Ausgleich der Dampfdrücke zwischen den beiden Gehäusen (2,9; 22,29) aufweist.

23. Gekapselte Positionsmeßeinrichtung nach Anspruch 20, dadurch gekennzeichnet, daß das Außengehäuse (9) Öffnungen (13) zum Ableiten von Kondensat aufweist.

24. Gekapselte Positionsmeßeinrichtung nach Anspruch 20, dadurch gekennzeichnet, daß die beiden Gehäuse (2,9;22,29) Längsschlitze (2a, 9a;22a,29a) aufweisen, die mittels V-förmig angeordneter Dichtlippen (7,8,10,11;27,28,210, 211) abgedichtet sind, durch die ein Mitnehmer (5,25) zur Verbindung von Abtasteinrichtung (4, 24) und Montageelement (6,26) hindurchgreift.

25. Gekapselte Positionsmeßeinrichtung nach Anspruch 24, dadurch gekennzeichnet, daß die Längsschlitze (2a,9a) in einer Flucht liegen, so daß sie der Mitnehmer (5) geradlinig durchgreift.

26. Gekapselte Positionsmeßeinrichtung nach Anspruch 24, dadurch gekennzeichnet, daß die Längsschlitze (22a,29a) in einem Winkel zueinander verlaufen, so daß der Mitnehmer (25) zum Durchgreifen der Dichtlippen (27,28;210,211) mehrfach gekröpft ist.

27. Gekapselte Positionsmeßeinrichtung nach Anspruch 20, dadurch gekennzeichnet, daß das Innengehäuse (2,22) mittels Befestigungselementen (2b,2c,2d, 2e;22b,22e,22d,22e) im Inneren des Außengehäuses (9,29) gehalten ist.

28. Gekapselte Positionsmeßeinrichtung nach Anspruch 27, dadurch gekennzeichnet, daß die Befestigungselemente als Ansätze (22b, 22c) und Einstellschrauben (22d, 22e) ausgebildet sind.

29. Positionsmeßeinrichtung nach Anspruch 1, dadurch gekennzeichnet, daß das Mittel (E1) aus einer thermischen Isoliereinheit besteht.

30. Positionsmeßeinrichtung nach Anspruch 1, dadurch gekennzeichnet, daß das Mittel (E2) aus einer Temperiereinheit besteht.

31. Positionsmeßeinrichtung nach Anspruch 29, dadurch gekennzeichnet, daß die thermische Isoliereinheit (E1) aus einer äußeren Isolierschicht besteht, die ein Gehäuse (G1) für den Trägerkörper (T1) mit der Meßteilung (M1) und für die Abtasteinheit (A1) ummantelt.

32. Positionsmeßeinrichtung nach Anspruch 29, dadurch gekennzeichnet, daß die thermische Isoliereinheit aus einer inneren Isolierschicht an den Innenflächen eines Gehäuses für den Trägerkörper mit der Meßteilung und für die Abtasteinheit besteht.

33. Positionsmeßeinrichtung nach Anspruch 29, dadurch gekennzeichnet, daß die thermische Isoliereinheit von einem Gehäuse für den Trägerkörper mit der Meßteilung und für die Abtasteinheit mit einem geringen Wärmeleitvermögen gebildet ist.

34. Positionsmeßeinrichtung nach Anspruch 30, dadurch gekennzeichnet, daß die Temperiereinheit (E2) aus einem U-förmigen Mittelteil (MT) mit in Längserstreckung verlaufenden Bohrungen (C) besteht, das an beiden Enden von plattenförmigen Endteilen (ETa, ETb) mit jeweils wenigstens einer Sammelbohrung (SBa, SBb) begrenzt ist, und daß die Temperiereinheit (E2) ein Gehäuse (G2) für den Trägerkörper (T2) mit der Meßteilung (M2) und für die Abtasteinheit (A2) ummantelt.

35. Positionsmeßeinrichtung nach Anspruch 30, dadurch gekennzeichnet, daß die Temperiereinheit gleichzeitig ein Gehäuse für den Trägerkörper mit der Meßteilung und für die Abtasteinheit bildet.

36. Positionsmeßeinrichtung nach Anspruch 29 und 34, dadurch gekennzeichnet, daß die Temperiereinheit (E2) aus mehreren Einzelstücken (MTa, MTb, MTc) besteht.

37. Positionsmeßeinrichtung nach den Ansprüchen 31 - 35, dadurch gekennzeichnet, daß das Gehäuse (G1, G2) einen Längsschlitz (L1, L2) aufweist der durch zwei Dichtlippenpaare (D1a, D1b, D2a, D2b) verschlossen ist, durch die ein Mitnehmer (N1, N2) aus einem Material mit geringer Wärmeleitfähigkeit für die Abtasteinheit (A1, A2) hindurchragt.

38. Positionsmeßeinrichtung nach Anspruch 29, dadurch gekennzeichnet, daß die thermische Isoliereinheit (E1) aus mehreren Einzelstücken besteht.

39. Positionsmeßeinrichtung nach den Ansprüchen 36 und 38, dadurch gekennzeichnet, daß die Einzelstücke (MTa, MTb, MTc) unterschiedliche Rasterlängen aufweisen.

40. Positionsmeßeinrichtung nach Anspruch 34, dadurch gekennzeichnet, daß die Bohrungen (C) des Mittelteils (MT) abwechselnd gegenläufig durchströmt sind.

**Claims**

1. Position measuring device - especially of encapsulated construction - with a measuring graduation carrier body (3; T1; T2) and a sensing device (4; A1; A2) for sensing the measuring graduation characterized in that means (3a, 3b, 3c; 9; 14; E1; E2) are provided for creating a temperature drop between the measuring graduation carrier body (3; T1; T2) and/or the sensing device (4; A1; A2) on the one hand and the immediate surroundings of the aforesaid components on the other hand.

2. Position measuring device according to claim 1, characterized in that the temperature drop is established by a heater (3a, 3b, 3c) for the measuring graduation carrier body (3) and/or the sensing device (4).

3. Position measuring device according to claim 2, characterized in that heating conductors (3b, 3c) are arranged on or in the measuring graduation carrier body (3).

4. Position measuring device according to claim 2, characterized in that the measuring graduation (3a) is formed as a heater conductor.

5. Position measuring device according to claim 2, characterized in that the dimensions of the measuring graduation carrier body (3) can be altered as required by the heater (3a, 3b, 3c) thereof.

6. Position measuring device according to claim 3, characterized in that heating current is supplied to the heating conductors (3b, 3c) through sliding contacts (4b, 4c, 4d) of the sensing device (4).

7. Position measuring device according to claims 2, 3 and 4, characterized in that the heated measuring graduation carrier body (3) is held tight at the ends with the aid of fixing elements (10, 11).

8. Position measuring device according to claim 7, characterized in that the heating current is supplied by means of feed conductors (12, 13) through the fixing elements (10, 11).

9. Encapsulated position measuring device according to claim 1, characterized in that the temperature drop is established by cooling a housing (2).

10. Encapsulated position measuring device according to claim 9, characterized in that at least one cold pole is created on the housing (2) by means of at least one thermo-element (9) - preferably a Peltier element.

11. Encapsulated position measuring device according to claim 9, characterized in that the housing has at least one cooled condensation chamber (14).

12. Encapsulated position measuring device according to claim 11, characterized in that the condensation chamber (14) is cooled by the coolant circuit of a machine in which the position measuring device (1) is installed.

13. Encapsulated position measuring device according to claim 11, characterized in that the condensation chamber (14) is cooled by at least one Peltier element.

14. Encapsulated position measuring device according to claim 11, characterized in that the condensation chamber (14) is cooled by carbon dioxide snow.

15. Encapsulated position measuring device according to claim 1, 12 or 15, characterized in that a moisture exchanger (15) is provided on the housing (2) and/or the condensation chamber ( 14).

16. Encapsulated position measuring device according to claim 15, characterized in that the moisture exchanger is formed as a wick (15).

17. Encapsulated position measuring device according to claim 1, characterized in that the condensate resulting from the temperature drop is bound chemically and/or physically.

18. Encapsulated position measuring device according to claim 17, characterized in that the binding of the condensate is effected by exchangeable silica gel capsules.

19. Encapsulated position measuring device according to claim 11, characterized in that a single condensation chamber (14) is provided for a plurality of position measuring devices (1).

20. Encapsulated position measuring device according to claim 1, characterized in that the encapsulation comprises an inner housing (2, 22) with low heat conductivity and an outer housing (9, 29) with higher heat conductivity.

21. Encapsulated position measuring device according to claim 20, characterized in that the inner housing (2, 22) consists of plastics material and the outer housing (9, 29) of aluminium.

22. Encapsulated position measuring device according to claim 20, characterized in that the inner housing (2, 22) has openings (13, 213) for equalisation of the vapour pressure between the two housings (2, 9; 22, 29).

23. Encapsulated position measuring device according to claim 20, characterized in that the outer housing (9) has openings (13) for removal of condensate.

24. Encapsulated position measuring device according to claim 20, characterized in that the two housings (2, 9; 22, 29) have longitudinal slots (2a, 9a; 22a, 29a) which are sealed by means of V-shaped sealing lips (7, 8, 10, 11; 27, 28, 210, 211), through which extends a follower (5, 25) for connection of the sensing device (4, 24) and a mounting element (6, 26).

25. Encapsulated position measuring device according to claim 24, characterized in that the longitudinal slots (2a, 9a) are aligned, so that the follower (5) can extend through them in a straight line.

26. Encapsulated position measuring device according to claim 24, characterized in that the longitudinal slots (22a, 29a) run at an angle to one another, so that the follower (25) is multiply bent to engage through the sealing lips (27, 28; 210, 211).

27. Encapsulated position measuring device according to claim 20, characterized in that the inner housing (2, 22) is retained in the interior of the outer housing (9, 29) by means of fixing elements (2b, 2c, 2d, 2e; 22b, 22c, 22d, 22e).

28. Encapsulated position measuring device according to claim 27, characterized in that the fixing elements are formed as projections (22b, 22c) and adjusting screws (22d, 22e).

29. Position measuring device according to claim 1, characterized in that the means (E1) consist of a thermal insulating unit.

30. Position measuring device according to claim 1, characterized in that the means (E2) consist of a temperature regulating unit.

31. Position measuring device according to claim 29, characterized in that the termal insulating unit (E1) consists of an outer insulating layer, which jackets a housing (G1) for the support body (T1) with the measuring graduation (M1) and for the sensing unit (A1).

32. Position measuring device according to claim 29, characterized in that the thermal insulating unit consists of an inner insulating layer on the inner surface of a housing for the support body with the measuring graduation and for the sensing unit.

33. Position measuring device according to claim 29, characterized in that the thermal insulating unit is formed by a housing for the support body with the measuring graduation and for the sensing unit, with a small conductivity of heat.

34. Position measuring device according to claim 30, characterized in that the temperature regulating unit (E2) consists of a U-shaped central part (MT) with bores (C) running in the longitudinal direction, which part is bounded at the two ends by plate-shaped end parts (ETa, ETb), each with a least one collecting bore (SBa, SBb), and in that the temperature regulating unit (E2) jackets a housing (G2) for the support body (T2) with the measuring graduaion (M2) and for the sensing unit (A2).

35. Position measuring device according to claim 30, characterized in that the temperature regulating unit forms at the same time a housing for the support body and for the sensing unit.

36. Position measuring device according to claims 29 and 34, characterized in that the temperature regulating unit (E2) consists of a plurality of individual parts (MTa, MTb, MTc).

37. Position measuring device according to claims 31 - 35, characterized in that the housing (G1, G2) has a longitudinal slot (L1, L2) which is closed by two sealing lip pairs (D1a, D1b, D2a, D2b), through which extends a follower (N1, N2) of a material with small conductivity of heat for the sensing unit (A1, A2 ).

38. Position measuring device according to claim 29, characterized in that the thermal insulating unit (E1) consists of a plurality of individual parts.

39. Position measuring device according to claims 36 and 38, characterized in that the individual parts (MTa, MTb, MTc) have different modular lengths.

40. Position measuring device according to claim 34, characterized in that the bores (C) of the central part (MT) are flowed through alternately in opposite directions.

**Revendications**

1. Dispositif de mesure de position - en particulier de type étanche - comportant un support de graduation de mesure (3; T1; T2) et un dispositif de lecture (4; A1; A2) pour la lecture de la graduation de mesure caractérisé en ce que des moyens (3a; 3b; 3c; 9; 14; E1; E2) sont prévus pour produire un gradient de température entre le support de graduation (3; T1; T2) et/ou le dispositif de lecture (4; A1; A2) d'une part et l'environnement immédiat des éléments cités d'autre part.

2. Dispositif de mesure de position selon la revendication 1 caractérisé en ce que le gradient de température est produit au moyen d'un dispositif de chauffage (3a; 3b; 3c) du support de graduation de mesure (3) et/ou du dispositif de lecture (4).

EP 0 348 660 B1

3. Dispositif de mesure de position selon la revendication 2 caractérisé en ce que des conducteurs chauffants (3b; 3c) sont placés sur le support de graduation de mesure (3).

4. Dispositif de mesure de position selon la revendication 2 caractérisé en ce que la graduation de mesure (3a) est réalisée sous forme de conducteur chauffant.

5. Dispositif de mesure de position selon la revendication 2 caractérisé en ce que le chauffage (3a; 3b; 3c) du support de graduation de mesure (3) permet de faire varier de manière appropriée les dimensions de ce dernier

6. Dispositif de mesure de position selon la revendication 3 caractérisé en ce que le courant de chauffage est amené aux conducteurs chauffants (3b; 3c) par l'intermédiaire de contacts à frottement (4b; 4c; 4d) du dispositif de lecture (4).

7. Dispositif de mesure de position selon les revendications 2, 3 et 4 caractérisé en ce que le support de graduation de mesure (3) chauffé est fixé solidement par ses extrémités au moyen d'éléments de fixation (10, 11).

8. Dispositif de mesure de position selon la revendication 7 caractérisé en ce que le courant de chauffage est amené au moyen d'arrivées (12, 13) par l'intermédiaire des éléments de fixation (10, 11).

9. Dispositif de mesure de position étanche selon la revendication 1 caractérisé en ce que le gradient de température est obtenu par refroidissement d'un boîtier (2).

10. Dispositif de mesure de position étanche selon la revendication 9 caractérisé en ce qu'au moins un pôle froid est créé sur le boîtier (2) au moyen d'au moins un thermocouple (9) - de préférence au moyen d'un élément Peltier.

11. Dispositif de mesure de position étanche selon la revendication 9 caractérisé en ce que le boîtier (2) comporte au moins une chambre de condensation (14) refroidie.

12. Dispositif de mesure de position étanche selon la revendication 11 caractérisé en ce que la chambre de condensation (14) est refroidie par le circuit de fluide réfrigérant d'une machine sur laquelle est monté le dispositif de mesure de position (1).

13. Dispositif de mesure de position étanche selon la revendication 11 caractérisé en ce que la chambre de condensation (14) est refroidie par au moins un élément Peltier.

14. Dispositif de mesure de position étanche selon la revendication 11 caractérisé en ce que la chambre de condensation (14) est refroidie au moyen de neige carbonique.

15. Dispositif de mesure de position étanche selon la revendication 1, 12 ou 15 caractérisé en ce qu'un dispositif de déshydratation (15) est monté sur le boîtier (2) et/ou sur la chambre de condensation (14).

16. Dispositif de mesure de position étanche selon la revendication 15 caractérisé en ce que le dispositif de déshydratation est réalisé sous la forme d'une mèche (15).

17. Dispositif de mesure de position étanche selon la revendication 1 caractérisé en ce que le condensat résultant du gradient de température est fixé par voie chimique et/ou par voie physique.

18. Dispositif de mesure de position étanche selon la revendication 17 caractérisé en ce que le condensat est fixé au moyen de capsules de Silicagel interchangeables.

19. Dispositif de mesure de position étanche selon la revendication 11 caractérisé en ce qu'une chambre de condensation (14) unique est prévue pour plusieurs dispositifs de mesure de position (1).

20. Dispositif de mesure de position étanche selon la revendication 1 caractérisé en ce que l'enceinte étanche se compose d'un boîtier intérieur (2, 22) à faible conductibilité thermique et d'un boîtier extérieur (9, 29) à conductibilité élevée.

21. Dispositif de mesure de position étanche selon la revendication 20 caractérisé en ce que le boîtier intérieur (2, 22) est en matière plastique et le boîtier extérieur (9, 29) est en aluminium.

22. Dispositif de mesure de position étanche selon la revendication 20 caractérisé en ce que le boîtier intérieur (2, 22) présente des ouvertures (13, 213) afin d'équilibrer les pressions de vaporisation entre les deux boîtiers (2, 9; 22, 29).

23. Dispositif de mesure de position étanche selon la revendication 20 caractérisé en ce que le boîtier extérieur (9) présente des ouvertures (13) pour l'évacuation des condensats.

24. Dispositif de mesure de position étanche selon la revendication 20 caractérisé en ce que les deux boîtiers (2, 9; 22, 29) présentent des fentes longitudinales (2a, 9a; 22a, 29a) qui sont fermées de manière étanche par des lèvres d'étanchéité (7, 8, 10, 11; 27, 28, 210, 211) entre lesquelles passe un entraîneur (5, 25) qui relie le dispositif de lecture (4, 24) et l'élément de montage (6, 26).

25. Dispositif de mesure de position étanche selon la revendication 24 caractérisé en ce que les fentes longitudinales (2a, 9a) sont alignées de sorte que l'entraîneur (5) les traverse de manière rectiligne.

26. Dispositif de mesure de position étanche selon la revendication 24 caractérisé en ce que les fentes longitudinales (22a, 29a) forment un angle entre elles, de telle sorte que l'entraîneur (25) présente plusieurs coudes pour traverser les lèvres d'étanchéité (27, 28; 210, 211 ).

10

27. Dispositif de mesure de position étanche selon la revendication 20 caractérisée en ce que le boîtier intérieur (2, 22) est maintenu à l'intérieur du boîtier extérieur (9, 29) au moyen d'éléments de fixation (2b, 2c, 2d, 2e; 22b, 22c, 22d, 22e).

28. Dispositif de mesure de position étanche selon la revendication 27 caractérisé en ce que les éléments de fixation se présentent sous la forme de saillies (22b, 22c) et de vis de réglage (22d, 22e).

29. Dispositif de mesure de position selon la revendication 1 caractérisé en ce que le moyen (E1) est composé d'une unité isolante thermiquement.

30. Dispositif de mesure de position selon la revendication 1 caractérisé en ce que le moyen (E2) est composé d'une unité de limitation de la température.

31. Dispositif de mesure de position selon la revendication 29 caractérisé en ce que l'unité isolante thermiquement (E1) se compose d'une couche isolante extérieure, qui enveloppe un boîtier (G1) recevant le support (T1) avec sa graduation de mesure (M1) et l'unité de lecture (A1).

32. Dispositif de mesure de position selon la revendication 29 caractérisé en ce que l'unité isolante thermiquement se compose d'une couche isolante intérieure appliquée sur les surfaces intérieures d'un boîtier recevant le support avec sa graduation de mesure et l'unité de lecture.

33. Dispositif de mesure de position selon la revendication 29 caractérisé en ce que l'unité isolante thermiquement est formée par un boîtier à faible conductibilité thermique recevant le support avec sa graduation de mesure et l'unité de lecture.

34. Dispositif de mesure de position selon la revendication 30 caractérisé en ce que l'unité de limitation de la température (E2) se compose d'une partie médiane (MT) en forme de U, munie de perçages (C) longitudinaux, qui est limitée à ses deux extrémités par des éléments terminaux (ETa, ETb) en forme de plaques, qui comportent chacun au moins un perçage collecteur (SBa, SBb), et en ce que l'unité de limitation de la température (E2) enveloppe un boîtier (G2) recevant le support (T2) avec sa graduation de mesure (M2) et l'unité de lecture (A2).

35. Dispositif de mesure de position selon la revendication 30 caractérisé en ce que l'unité de limitation de la température constitue simultanément un boîtier recevant le support avec sa graduation de mesure et l'unité de lecture.

36. Dispositif de mesure de position selon la revendication 29 et 34 caractérisé en ce que l'unité de limitation de la température (E2) est formée de plusieurs éléments séparés (MTa, MTb, MTc).

37. Dispositif de mesure de position selon les revendications 31 - 35 caractérisé en ce que le boîtier (G1, G2) présente une fente longitudinale (L1, L2) qui est fermée par deux paires de lèvres d'étanchéité (D1a, D1b, D2a, D2b), entre lesquelles pénètre un entraîneur (N1, N2) réalisé en un matériau à faible conductibilité thermique, pour l'unité de lecture (A1, A2).

38. Dispositif de mesure de position selon la revendication 29 caractérisé en ce que l'unité isolante thermiquement (E1) est formée de plusieurs éléments séparés.

39. Dispositif de mesure de position selon les revendications 36 et 38 caractérisé en ce que les éléments séparés (MTa, MTb, MTc) ont des longueurs de réseau différentes.

40. Dispositif de mesure de position selon la revendication 34 caractérisé en ce que les perçages (C) de la partie médiane (MT) sont parcourus en alternance à contre-courant.

Fig.1

## Fig. 2

## Fig. 5

Fig. 3

Fig. 4

Fig. 6

Fig. 7

FIG. 8

## FIG. 9

## FIG. 10